# EUROPEAN PATENT SPECIFICATION

(11) **EP 1 807 971 B1**
(45) Date of publication and mention of the grant of the patent: **30.05.2018**
(21) Application number: 05798856.0
(22) Date of filing: 31.10.2005
(51) Int. Cl.: H04W 24/00, H04W 24/10, H04W 84/18, H04W 88/18, H04L 12/24

(54) **DYNAMIC NETWORK MANAGAEMENT**
VERWALTUNG VON DYNAMISCHEM NETZWERK
GESTION DE RÉSEAU DYNAMIQUE

(30) Priority: 03.11.2004 US 624739 P; 20.05.2005 US 683514 P
(43) Date of publication of application: 18.07.2007
(73) Proprietor: Telefonaktiebolaget LM Ericsson (publ), 164 83 Stockholm (SE)
(72) Inventor: NIELSEN, Johan, S-753 24 Uppsala (SE)
(74) Representative: Brann AB
(86) International application number: PCT/SE2005/001617
(87) International publication number: WO 2006/049558

(56) References cited:
- US-A1- 2003 016 629
- US-A1- 2003 139 187
- US-A1- 2004 057 409
- US-B1- 6 751 200
- Koon-Seng Lim ET AL: "Developing Pattern-Based Management Programs" In: "Correct System Design", 1 November 2001 (2001-11-01), Springer International Publishing, Cham 032548, XP055254655, ISSN: 0302-9743 ISBN: 978-3-642-28871-5 vol. 2216, pages 345-358, DOI: 10.1007/3-540-45508-6_28, * abstract; figures 1, 4, 5 * * page 351 - page 353 *
- K.-S. LIM ET AL: "A navigation pattern for scalable Internet management", IEEE/IFIP INTERNATIONAL SYMPOSIUM ON INTEGRATED NETWORK MANAGEMENT PROCEEDINGS, 1 January 2001 (2001-01-01), pages 405-420, XP055254672, DOI: 10.1109/INM.2001.918056 ISBN: 978-0-7803-6719-7

## Description

### TECHNICAL FIELD

The present invention relates in general to devices, systems and methods for communication network management, and in particular to devices, systems and methods for decentralized management of dynamic networks.

### BACKGROUND

Centralised network management has well-known drawbacks. It presents poor scalability regarding management traffic, processing load on the management station, and execution times. Furthermore, a centralised network management approach is not easily implemented in a mobile, wireless environment, where domains are composed dynamically. Document D1 "Developing Pattern-Based Management Programs" (XP 55254655) describes an approach to distributed management for large-scale dynamic networks based on a methodical use of distributed control schemes.

Document D2 "A Navigation Pattern for Scalable Internet Management" (XP 55254672) describes the echo pattern, a scheme for distributing management operations which addresses in managing large IP networks. Decentralized management approaches in distributed network management system have been presented, e.g. based on the pattern-based management paradigm, see e.g. [1]-[4]. Graph traversal algorithms are used to control and coordinate the processing and aggregation of management information inside the network. From the perspective of a network manager, the algorithm provides the means to 'diffuse' or spread the computational process over a large set of nodes. A key feature of the approach is its ability to separate this mechanism of diffusion and aggregation from the control of the actual management operation. The paradigm achieves this through the development of two important concepts: the navigation pattern and the aggregator. The former represents the generic graph traversal algorithms that implement decentralized control, while the latter implements the computations required realising the task. A navigation pattern controls the flow of execution of a distributed management operation. It is described by an asynchronous network algorithm, which can be analysed for its complexity and scalability properties.

The main benefits of pattern-based management are that it separates the control of the task from its flow control, it enables building scalable management systems, and it facilitates management in dynamic environments.

So far pattern-based management work has assumed fixed, wired networks with static links between nodes in the network. This implies that a node knows what neighbours it has and hence on what links to distribute a pattern and on what links to expect a reply to return. Furthermore, this static environment is highly reliable, almost no packets are lost, nodes almost never die or disconnects, and there is no mobility in the network. Hence, the patterns developed so far have assumed an error-free environment. Some modifications were proposed to an echo pattern to allow it not to be caught in a deadlock if a node or link failed during a pattern being issued. They propose two different robust versions of the echo pattern. The skip-echo pattern works as a normal echo algorithm except that if the node notices that one of its neighbours goes down, it removes that node from the node list from whom it expects answers to come in. The wait-echo pattern will in addition to the skip-echo pattern accept input from a node previously registered as inactive if the node returns to active state before the pattern has completed its task in the neighbouring node. A third option is to set a timer in each node, and the pattern will wait for input from its neighbours until the timer expires. However, this work also assumes a wired, static network.

A mobile and wireless network, on the other hand, assumes a highly dynamic environment, with nodes and networks moving around, networks composing and decomposing ad-hoc, choosing between multiple access technologies, fixed as well as wireless, depending on current requirements and availability. This environment imposes many new requirements on the patterns to be used in order for them to be useable in such an environment.

### SUMMARY

Mobile networks assume a highly dynamic environment, with nodes and networks moving around, networks composing and decomposing ad-hoc, choosing between multiple access technologies, fixed as well as wireless, depending on current requirements and availability. A general problem with network management according to prior art is that it is not very well adapted to network requirements for mobile and wireless network environments.

An object of the present invention is to provide methods, devices and systems for network management in wireless communication networks. Another object of the present invention is to provide methods, devices and systems for network management in communication networks supporting mobility. A further object of the present invention is to improve robustness of network management in dynamic communication networks.

The objects mentioned above are achieved by methods, devices and systems according to the enclosed patent claims. In general words, the present invention enables pattern-based network management to be used in wireless, mobile networks, with a high degree of dynamicity. An explorer message is successively propagated over a dynamic network. In connection with such propagation, any operating links of the network are identified. This identification is preferably based on that the nodes receiving the explorer message will acknowledge the receipt back to the sending node. The sending node may thereby identify which nodes that are reachable at the moment. The receiving nodes will reply to the explorer message and successively return the replies to the original node. A node that already has received a copy of the explorer message from another node does not have to reply to this copy of the explorer message. The replies are compiled at the original node. The replies received at the original node may, however, be partially compiled by other nodes during the aggregation phase. In one embodiment, the compilation of the replies will form a basis for network management operations. In another embodiment, the content of the explorer message itself will form a basis for network management operations in at least one of the receiving nodes, i.e. information carried by the explorer message can cause network management operations to be performed, and the replies then preferably contains information about results of such operations. Preferably, a node will retain a copy of all potential nodes it receives an explorer message from for a predefined time interval in order for the node to send the reply message over an alternative link if the primary link no longer is operating.

In a preferred embodiment, "keep-alive" messages are sent and acknowledged at regular intervals between any two nodes in order to allow the nodes to know whether the link still is valid. Furthermore, if the link fails while an explorer message is being executed the parent node will realise this when keep-alive messages stop appearing from the child node, while the child node might not realise this until it tries to send the reply message to its parent node, and the child node will preferably try to search for alternative paths.

The present invention is not dependent on a specific pattern. Instead the basic ideas of the present invention can be used by any pattern being developed for use within a communication network environment.

An advantage with the present invention is that the advantages by implementing decentralised network management are made available also in wireless and mobile communications networks in a robust manner.

### BRIEF DESCRIPTION OF THE DRAWINGS

The invention, together with further objects and advantages thereof, may best be understood by making reference to the following description taken together with the accompanying drawings, in which:
FIG. 1 is a schematic drawing of an embodiment of a wireless communication network having a high degree of mobility;
FIG. 2 is a message flow diagram illustrating timing of messages sent according to an embodiment of a method according to the present invention;
FIGS. 3A-C are message flow diagrams illustrating timing of messages sent in different situations according to an embodiment of a method according to the present invention;
FIG. 4 is a schematic drawing of an embodiment of a wireless communication network according to the present invention in case of a broken link;
FIG. 5 is a schematic drawing of another embodiment of a wireless communication network according to the present invention in case of a broken link;
FIG. 6 is a schematic drawing of an embodiment of a wireless communication network according to the present invention in case of a broken link, where no alternative parent nodes are directly available;
FIG. 7 is a flow diagram of main steps of an embodiment of a method according to the present invention; and
FIG. 8 is a block diagram of relevant main parts of an embodiment of a device according to the present invention.

### DETAILED DESCRIPTION

The present invention provides fundamental enhancements to pattern-based network management in order for them to be possible to be used in a wireless mobile environment where nodes, links and networks connect and disconnect in an unpredictable way.

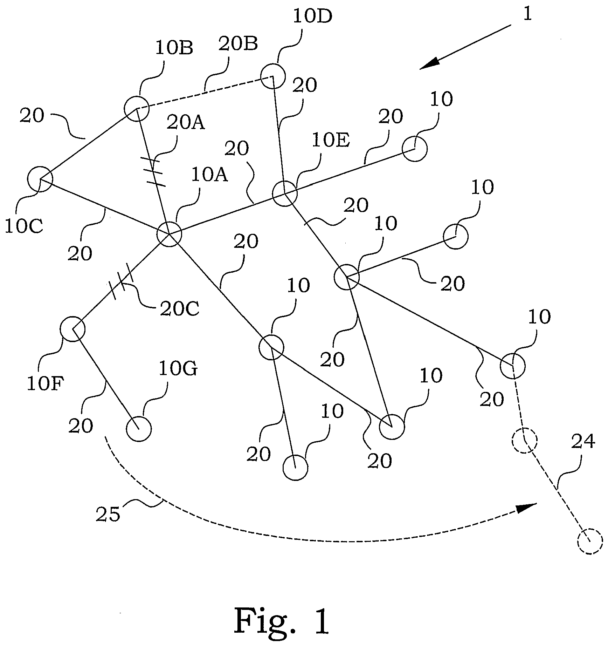

Fig. 1 illustrates a schematic wireless mobile communications network 1, comprising a number of nodes 10, 10A-G. At each instant the nodes 10, 10A-G are directly or indirectly connected to each other by operating links 20, 20A-C. However, since the links 20, 20A-C are wireless links, and the network nodes 10, 10A-G are generally mobile, the situation can change from one time to another. Up to now, very little work has focused on researching and designing decentralized management procedures that will be used in a wireless environment, where a node might not know what other nodes are within transmission range of it. Also, the operating links may suffer from high bit, frame or link-error rates. Furthermore, such dynamical networks have to be configured to allow high mobility both within and between networks.

A few examples of possible scenarios will be described in connection with Fig. 1. Nodes 10A and 10B are originally connected by an operating link 20A. In a scenario where node 10A initiates a network management operation, messages will be transferred on the operating link 20A, viewing node 10A as a "parent node" and node 10B as a "child node". If the link 20A for some reasons becomes unavailable, the network situation will be changed. The "child node" 10B will now be a child node only with respect to node 10C and consequently a "grandchild node" to node 10A. Nevertheless, if such a link failure occurs during the network management process, any message between nodes 10A and 10B has to be re-routed via node 10C.

In another scenario, node 10D may communicate with node 10A via node 10E. However, if a new operating link 20B is created between node 10D and node 10B, any communication between node 10A and 10D can then be performed either via node 10E as before, or via node 10B using the new link 20B. Nodes 10A and 10D thus have to manage to realise that messages concerning one and the same task may be received on different links.

In yet another scenario, node 10A communicates with node 10G via node 10F. A link 20C fails, which temporarily isolates nodes 10F and 10G. However, eventually, the "island" of node 10F and 10G moves, indicated by the arrow 25, and reconnects to the network at the position indicated by 24. The communication between node 10A and 10G can then be resumed, however, now on a completely different set of links.

As has been shown in prior art, pattern-based network management brings a promising concept of performing decentralised network management by decoupling the actual control from the distribution of the control messages. Pattern-based management has a strong potential for providing near-real-time connectivity information, e.g. flow performance or traffic statistics, in the context of dynamic network composition of mobile networks. However, in order to apply its concepts in scenarios as presented above, it is necessary to provide means to at least allow a distributed management system to dynamically adapt to accommodate changes in network composition, e.g. the connectivity among network domains and network nodes. Furthermore, the patterns should be made robust to be executable during topology changes and connectivity failures. The present invention therefore aims to provide means for realisation of effective network management in the context of decentralised management.

The present invention mainly concerns three of the main different characteristics between fixed, wired networks and mobile, wireless networks. These characteristics impose new requirements on the patterns to be used. The patterns must be robust, they must be able to cope with a wireless environment, and they must work efficiently in a mobile environment where nodes and networks move around.

In order to visualise the inventive ideas, an echo-type pattern is going to be used in the present disclosure. However, the ideas of the present invention can be applied also to other patterns to be used in a wireless, mobile environment. Non-exclusive examples of other patterns that can be used are the progressive wave pattern and the stationary wave pattern. They can be used to update Internet routing protocols and interactions between peer nodes in peer-to-peer networks, respectively.

A basic echo-pattern is characterised by a two-phase operation. First, an expansion phase occurs, where a flow of explorer messages (control messages) emanates from an original node initiating network management. Nodes, upon receiving an explorer message for the first time, send copies along all direct links, possibly except for the link where the explorer came from, and then perform a local network management operation, specified in the explorer message. Such a local network management operation can be of differing complexity and may even be as simple as reading out some parameters. An explorer message that arrives at an already visited node triggers the generation of a reply message, which is sent back to the node where the explorer message came from. This reply message informs the sending node about that the explorer message already was received from another node.

The second phase of the echo pattern is a contraction phase, where a node waits until it has received a reply message for each explorer message it has sent out. It then aggregates the results from its own network management operation and those contained in the received reply messages and, finally, it propagates a reply message with the result of that aggregation back.

The echo time complexity increases linearly with the network diameter, which results in fast execution times in networks with a connectivity distribution that follows the power law (such as the Internet). Its traffic complexity grows linearly with the number of network links and the management traffic produced by executing this pattern is distributed evenly across all links, without causing hot spots, where congestion can occur.

The wireless environment, especially in combination with mobility, brings a new set of requirements that patterns being used in such an environment must cope with. One of the most obvious differences compared to a fixed network is that a node does not necessarily know what neighbours it has within transmission range. This means that a node upon receipt of a pattern message cannot choose to forward this message on all of its active links, the node must first find out what other nodes are within transmission range of it, and potentially which of these nodes might be relevant to forward the message to.

One way of doing this is for the node to first broadcast a request message for neighbours to answer to find out which nodes are within transmission range and are active. When these nodes reply, the transmitting node knows who are within transmission range. This is done by allowing the receiving node to acknowledge the receipt of the request message. In this way the transmitting node knows who to send the explorer message to, and the actual explorer message is subsequently transmitted to these nodes. However, a disadvantage with this approach is that there has to be a certain time-out time in which the replies are collected, which slows the process down considerably.

Instead, according to the present invention, the transmitting node can transmit the explorer message without prior knowledge of what other nodes are within transmission range. The nodes being able to receive the explorer message, acknowledge such a receipt. The original node registers those nodes that acknowledge the explorer message as nodes having valid links, from which the transmitting node may expect answers. Thus, the explorer message is actually transmitted before the transmitting node has a full knowledge about operating links. However, by compiling the acknowledgements, operating links in the dynamic communication network are identified in connection with the propagating of the explorer message. The same principle is then preferably used for successive steps of propagating the explorer message through the communication network.

The explorer message has in such a configuration a double purpose. One purpose is to communicate a message to a number of nodes requesting measures to be taken, concerning network management. The other purpose is to create information over which communication paths the explorer message is spread. Such information is not available before the transmission of the explorer message. Furthermore, at least during the expansion phase of an explorer message, the nodes participating in the successive spreading of the explorer message do only have information about the closest parts of the communication paths. In other words, the explorer message is transmitted in blind. The actual communication path is instead indirectly determined by the network structure, and knowledge about the communication path is collected successively in connection with the provision of the explorer message. The node originating the explorer message does not necessarily actively influence the choice of communication path.

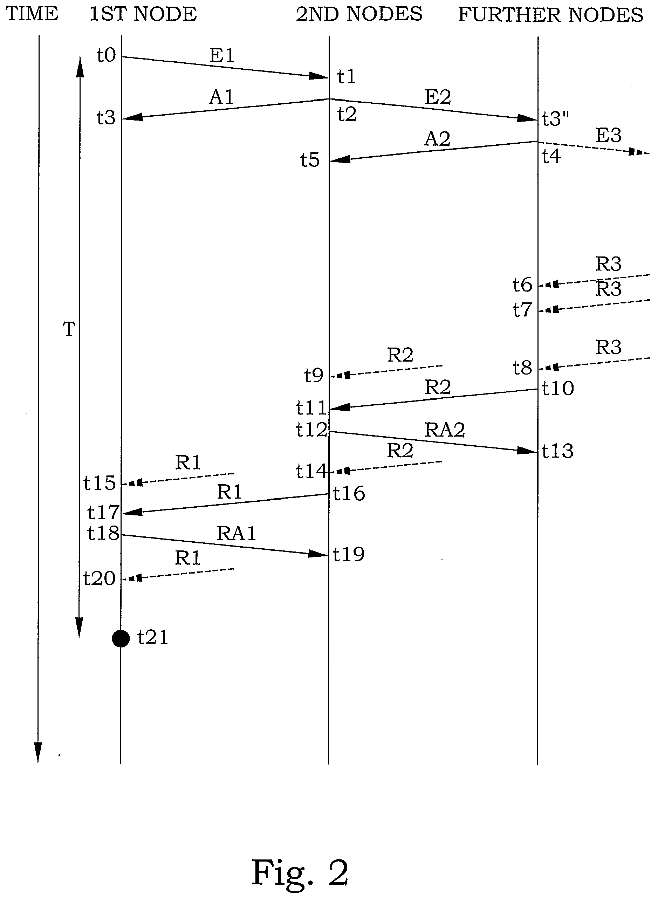

The above ideas are illustrated by a time diagram in Fig. 2. The vertical lines correspond to nodes in different stages. The 1st node is the node originating the explorer message. One or several 2nd nodes receive the explorer message from the 1st node. One or several "further" nodes represent the lower parts of the hierarchical configuration of the pattern propagation. At time t0, an explorer message E1 is sent from the 1st node and is received by the 2nd nodes at time t1. The 2nd nodes send an acknowledgement message A1 back to the 1st node at time t2, which acknowledgement message A1 is received by the 1st node at time t3. The 1st node is now aware of the 2nd nodes that are reachable through operating links. At time t2, the explorer message is also forwarded E2 to further nodes, which receive the explorer message E2 at time t3". Depending on the actual content of the explorer message E1, the explorer message E2 may be identical to explorer message E1 or a modified version thereof. At time t4, the further nodes forwards the explorer message E3 further down the hierarchy, and an acknowledgement message A2 is returned to the 2nd nodes. When the 2nd nodes at time t5 receives the acknowledge message A2, they are aware of their operating links to further nodes. This is the expansion phase of the echo pattern of the present embodiment.

At times t6, t7, t8, the further nodes receive reply messages R3 on the explorer message E3. When reply messages R3 are received from all nodes that have acknowledged reception of explorer message E3 or a timeout has released, the reply messages R3 are compiled with any additional information from the further node itself into a reply message R2, which is sent at time t10. Different reply messages R2 on the explorer message E2 are received by the 2nd nodes at times t9, t11 and t14. When reply messages R2 are received from all nodes that have acknowledged reception of explorer message E2, the reply messages R2 are compiled and any additional information from the 2nd nodes themselves is added into a reply message R1, which is sent at time t16. Different reply messages R1 on the explorer message E1 are received by the 1st node at times t15, t17 and t20. When reply messages R1 are received from all nodes that have acknowledged reception of explorer message E1, the reply messages R1 are finally compiled and at time t21, the 1st node can evaluate the results of the explorer message. The evaluation can take place a time T after the original explorer message E1 was transmitted. If appropriate, the 1st node may then perform any further necessary network management operations based on the compilation.

In a particular embodiment, the acknowledgement messages are identical to the forwarded explorer message. With reference to Fig. 2, the acknowledge message A1 may e.g. be identical to the explorer message E2. This is possible since the intended receiver of the acknowledge message, in this case the 1st node, can detect that the received message A1 is associated with the same explorer message E1 that the 1st node sent very recently. Since the A1 comprises information, explicitly or implicitly, about the sending node, in this case one of the 2nd nodes, the 1st node knows that the 2nd node indeed has received the original explorer message E1. This may simplify the message creation procedures.

Since the communication network is assumed to be dynamic, a situation may occur, where an explorer message is received and acknowledged, but where the corresponding link fails before the reply message is returned. In such a case, the node that transmitted the explorer message may wait for a reply that can not be distributed through the earlier operating link. The node sending the reply message may neither know about the broken link.

A solution is preferably to apply also acknowledgements of receipt of reply messages. With reference to Fig. 2, when the 2nd nodes at time t11 receives the reply message R2, the 2nd nodes sends back at time t12 a reply acknowledgement message RA2 to the further node sending the reply message, which reply acknowledgement message RA2 is received at time t13. The further node receiving the reply acknowledgement message RA2 then knows that the reply is received and that the link still is operating. If no reply acknowledgement message RA2 would be received within any reasonable time, the further node may assume that the link is broken and may search for alternative routes for the reply messages. Such routines are discussed more in detail below. The same mechanism is preferably applied at all levels. For instance, when the 1st node receives the reply message R1, a reply acknowledgement message RA1 is sent at time t18. At time t19, the corresponding 2nd node has knowledge about that the link still is operating, and no further actions for sending the message along a new route have to be performed.

In an analogue manner as for the forwarded explorer message to operate as an acknowledge message, also a broadcasting of reply messages can be used as acknowledgement messages for received reply messages. However, by broadcasting reply messages the number of packet collisions that are not detected might increase, thereby decreasing the total number of aggregated information. Furthermore, the node originally creating the message has always to send explicit acknowledgments anyway.

If a link fails during a procedure as described above, there might be several approaches to handle the situation. By introducing reply acknowledgement messages, the replying node may be made aware of the lost link, but the node waiting for the reply will still be unaware of the lost link and may therefore be stuck in a deadlock. In a basic approach to solve this, the node waiting for a reply message may have a timeout period set, and when the timeout period is ended, the node will assume that the link is lost and will therefore proceed without the results from such a node. However, since the time T until a decision can be taken or a reply message can be created also during operating circumstances may be long and undetermined, the timeout period has to be set to be very long, in order to allow replies from distant nodes to appear.

Another solution is to provide some "keep-alive" messages regularly transmitted between the nodes during the propagation of the pattern. Such messages can be viewed as subsequent acknowledgement messages and allow the transmitting node to keep track from which nodes it still can expect replies.

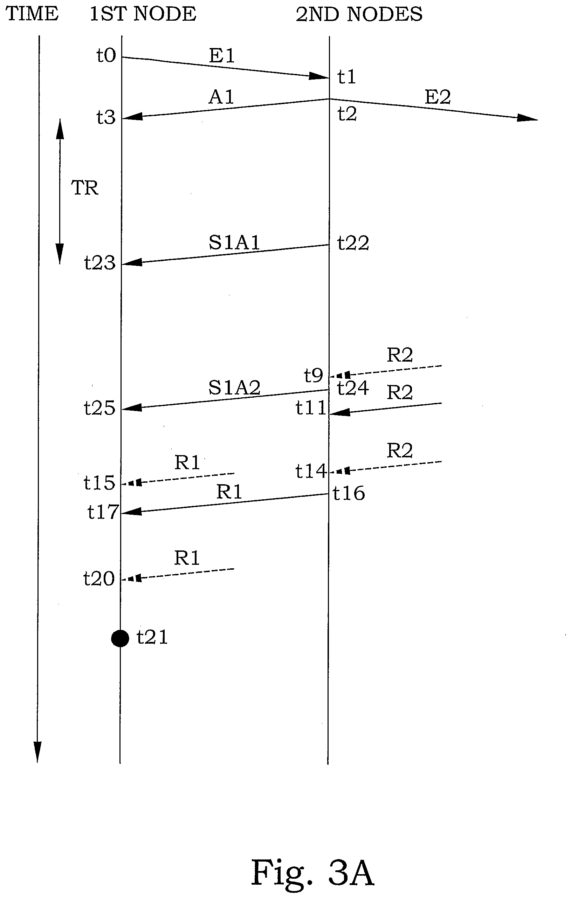

This procedure is illustrated in Fig. 3A. The propagation of the explorer message is performed as in Fig. 2. However, if the 2nd node a time TR after the time t2, when sending the (first) acknowledge message A1, has not prepared any reply message, a subsequent acknowledgement messages S1A1 is sent to the 1st node at time t22. The 1st node receives the subsequent acknowledgement messages S1A1 at time t23 and is then aware of that the link still is operating. The procedure is then repeated with a periodicity of TR, so that at time t24, another subsequent acknowledgement messages S1A2 is sent from the 2nd node, and received at the 1st node at t25. When the final reply message R1 is returned, it will be received within a period TR from the last receipt of an acknowledge message A1 or a subsequent acknowledgement messages S1A1, S1A2.

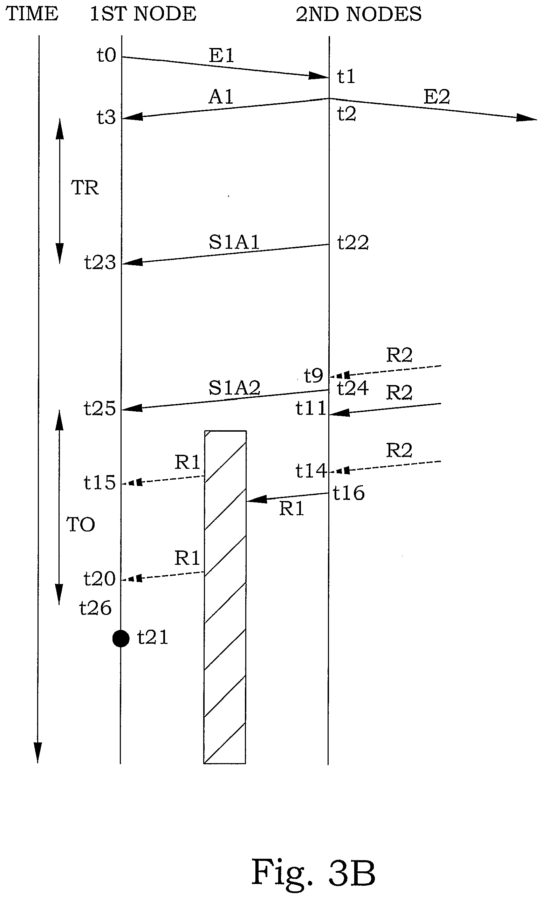

In Fig. 3B, the situation of a broken link is illustrated by the hashed rectangle B. The broken link prevents in this example the second subsequent acknowledgement messages S1A2 to reach the 1st node. When, at a timeout period TO exceeding the TR period after the last receipt of an acknowledge message A1 or a subsequent acknowledgement messages S1A1, S1A2, i.e. at time t26, the 1st node can draw the conclusion that the link towards the 2nd node is no longer operable, and may consequently proceed with any evaluation of replies. This timeout period TO has to be longer than TR but can typically be set considerably shorter than the timeout period that has to be used without the use of subsequent acknowledgement messages S1A1, S1A2.

However, a too short TR period will instead load the communication network with huge amounts of subsequent acknowledgement messages S1A1, S1A2.

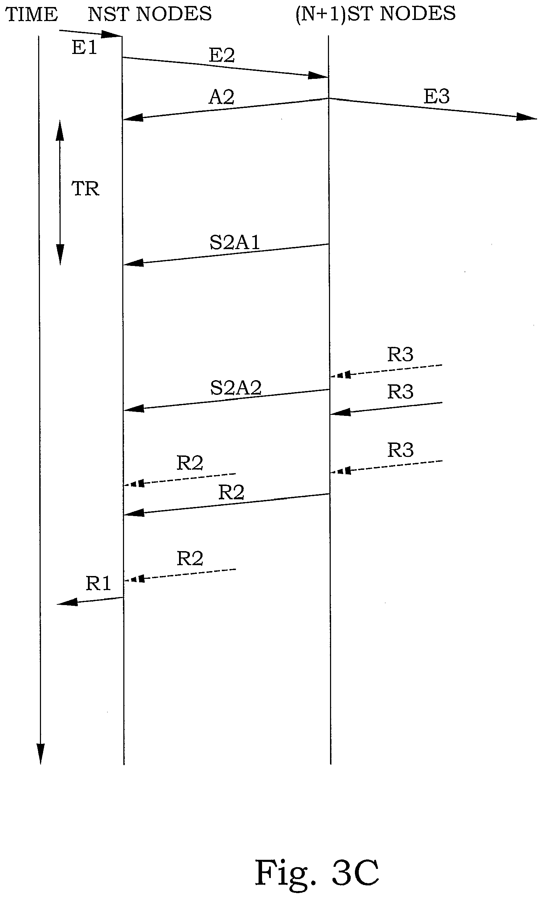

As indicated by Fig. 3C, the same approach can be applied in each level of the pattern propagation. Here subsequent acknowledgement messages S2A1, S2A2 are sent from (N+1)st nodes to Nst nodes.

In pattern-based network managing, patterns must continue to work even when nodes and links fail, and preferably they must recover from these errors as efficiently as possible. Generally, the amount of information being gathered decreases with the probability that a node or link fails. However, a lot of information should be possible to gather even though some links or nodes fail. If the robustness of the pattern procedure was further enhanced, the amount of information that is gathered can be increased. For example, a node that has received a request for information from another node detects that the link is no longer working when it tries to reply with an answer. One approach is then to let the node find alternative links and routes for the information it has gathered.

In a typical prior art pattern, if a node receives one and the same explorer message for a second or subsequent time, it discards these multiple explorer messages and only serves the first one. Possibly, it will send an immediate reply message, informing the sending node that it already has received the explorer message in question.

However, according to a preferred embodiment of the present invention, the node instead stores information of these tentative routes until it successfully has delivered its reply on the explorer message. If a failure then occurs, there is information that may assist in finding a route via one of the other nodes sending the same explorer message. The nodes should preferably keep a registry for a specified amount of time over what nodes they have received explorer messages from, even if the explorer message is ignored or the node has replied that it already has received an earlier copy of the explorer message.

This of course imposes new requirements on the nodes "unexpectedly" receiving extra information to deal with this. A reply, however, preferably comprises an identification of the explorer message from which it emanates and information about the node sending the reply. The node "unexpectedly" receiving a reply will therefore anyway be able to identify over which link that reply was expected to come.

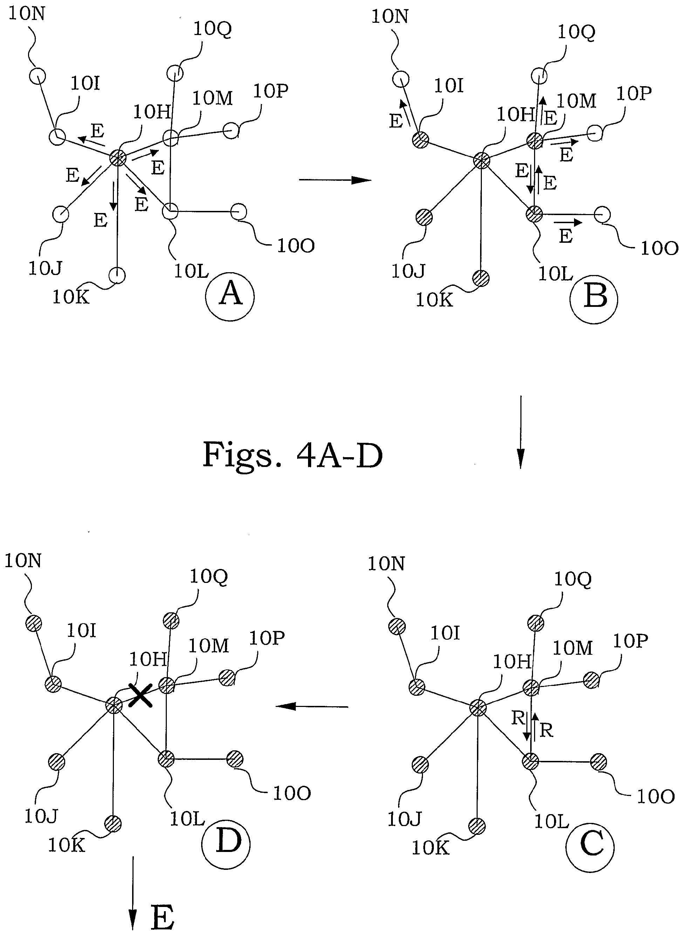

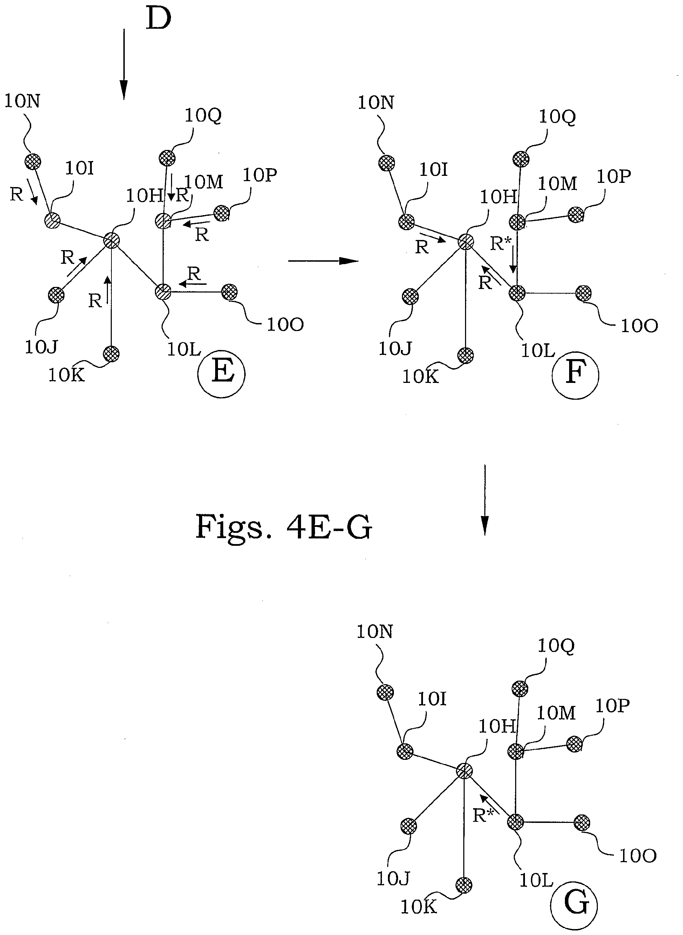

Figure 4 illustrates this situation by an example. In part A, a node 10H transmits an explorer message E to all its neighbour nodes. The nodes 10I-M forward the explorer message E to further nodes, as indicated in part B. Node 10M then receives the explorer message E for the second time and a direct reply message R is returned to node 10L informing that node 10L normally should not expect any normal reply from node 10M. This is indicated in part C. The explorer message now has reached the "leaves" of the network 1, and the tasks associated with the explorer message are performed. By "leaf" is intended to denote nodes having no further "children" to send any message to. These tasks could be defined as network management operations, even if the operations just comprise requests for different kinds of information. During the preparation of the reply, the link between nodes 10M and 10H is broken, as indicated by the cross in part D.

In part E, the contraction phase starts. The nodes 10J-K, 10N-Q send reply messages R to the nodes 10I, 10H, 10L and 10M, from which they received the first explorer message. The reply information is compiled and further reply messages R are sent from nodes 10I and 10L to node 10H, as indicated in part F. However, node 10M received its first explorer message from node 10H directly and tries first to reply directly to node 10H. However, the broken link is discovered and instead node 10M retrieves from its registers that the same explorer message was indeed received also from node 10L. Node 10M therefore sends a reply message R* to node 10L, with the added information about the broken link. Finally, in part G, node 10L forwards the "unexpectedly" received reply message R* to the original node 10H, which now has received information from the entire network, despite the broken link.

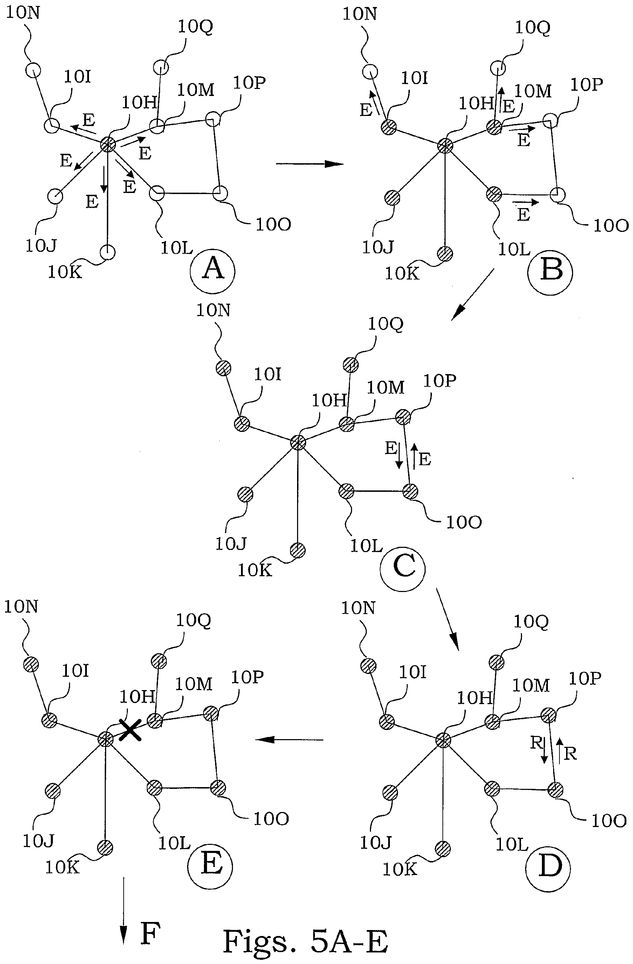

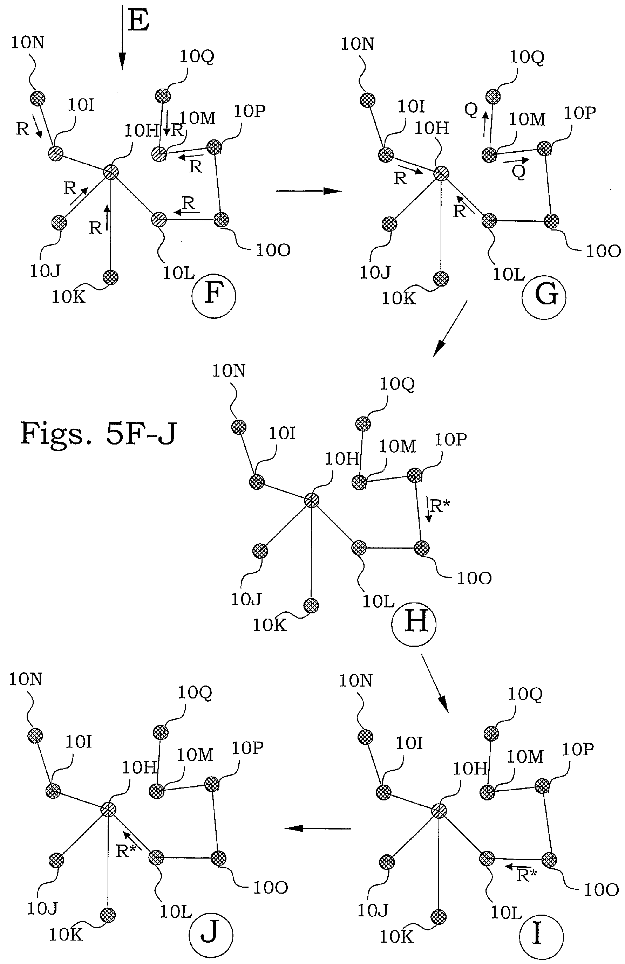

Another situation that may occur is when a node realises that its upstream neighbour no longer is contactable, and that it has no registered alternative neighbours to send its data to. One approach to solve the problems in such a situation is to send the data or requests therefore further downstream to allow for such child nodes to find an alternative route. Fig. 5 illustrates an example of this situation. In this network, there is an operating link between nodes 10P and 10O. In part A, node 10H sends an explorer message E to the nodes 10I-M. In part B, nodes 10I, 10L and 10M forwards the explorer message E to nodes 10N-Q. In part C, nodes 10O and 10P forward the explorer message E to each other, and in part D, the nodes 10O and 10P subsequently send reply messages R to inform that there is another main reply path available. In part E, during the preparation of replies in the leaf nodes, the link between nodes 10M and 10H is broken. In part F, the contraction phase starts and the nodes 10J-K, 10N-Q send reply messages R to the nodes 10I, 10H, 10L and 10M, from which they received the first explorer message. The reply information is compiled and further reply messages R are sent from nodes 10I and 10L to node 10H, as indicated in part G. However, node 10M received its first explorer message from node 10H directly and tries first to reply directly to node 10H. However, the broken link is discovered and instead node 10M tries to retrieve from its registers if there are any alternative "parent" nodes available. Also this attempt fails.

Instead, node 10M sends request messages Q downstream to make an inquiry if the "children" nodes have any alternative routes available. The request messages Q may comprise the information of the reply message or may be a pure request message, whereby any provision of reply information has to be performed upon a positive answer. This request for an alternative path downstream may preferably proceed in several steps, if necessary. When a positive answer is achieved, in this case from node 10P, the reply information, intended to be sent from node 10M to node 10H, is transmitted as a reply message R* to node 10O, as indicated in part H with a special flag indicating that this reply message is taken an alternative path back to the originating node. In part I, the reply message R is forwarded to node 10L, and in part J, the reply message R is finally forwarded to node 10H. Once again, all information is collected despite a broken link.

The mobility within a communication network put additional requirements on the pattern procedures. During the course of a pattern, nodes may move, thereby loosing their direct connection to some nodes while setting up new connections to other nodes. Patterns must preferably be able to cope with these situations, where the pattern might go out on one link and return on another link, or be passed on upstream through other "parallel" nodes and routes.

This implies that the procedures have to be robust enough to survive the situation where reply messages do not return to the transmitter, to be robust enough to survive the situation where reply messages arrive over other links on which the explorer message has been transferred, and to be robust enough to survive the situation where reply messages arrive over links which the node has not transmitted any explorer pattern on. Mobility aware patterns have to allow that a node or network changes its point of attachment while a pattern is being executed. A solution according to the present invention is based on transmitting a "new route" request message to any or at least one node having an operating link to a node experiencing a broken link. The new route request message comprises typically an inquiry if a node receiving the new route request message has a connection to the node from which the explorer message originally came from. This new route request message may not necessarily only be directed to nodes which are known to have operating links, but may also be directed to "new" nodes. The inquiry comprises preferably an investigation whether the node receiving the new route request message has received the explorer message in question from any other node or not.

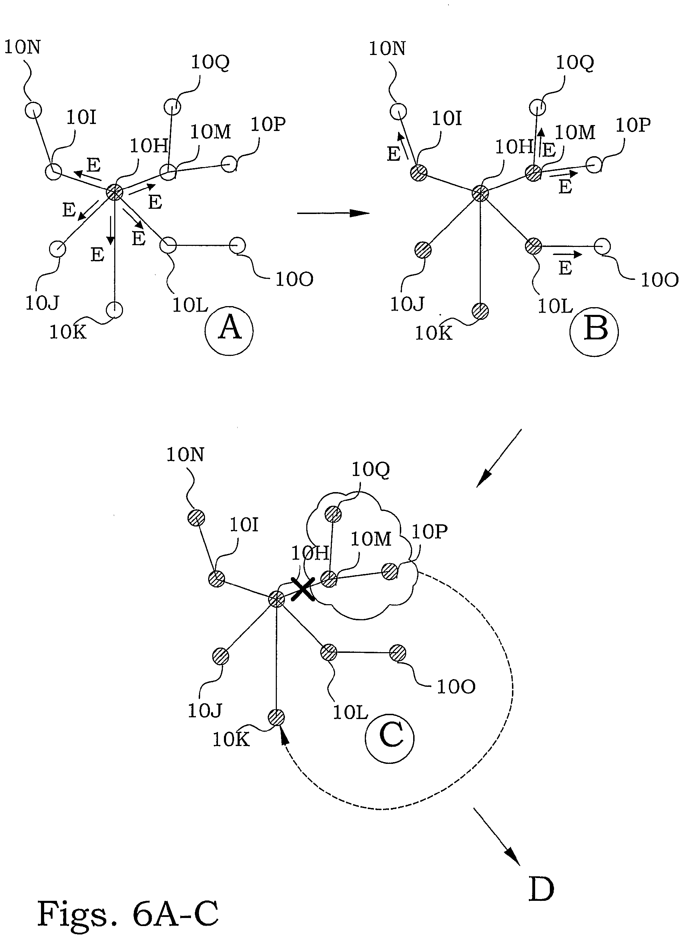

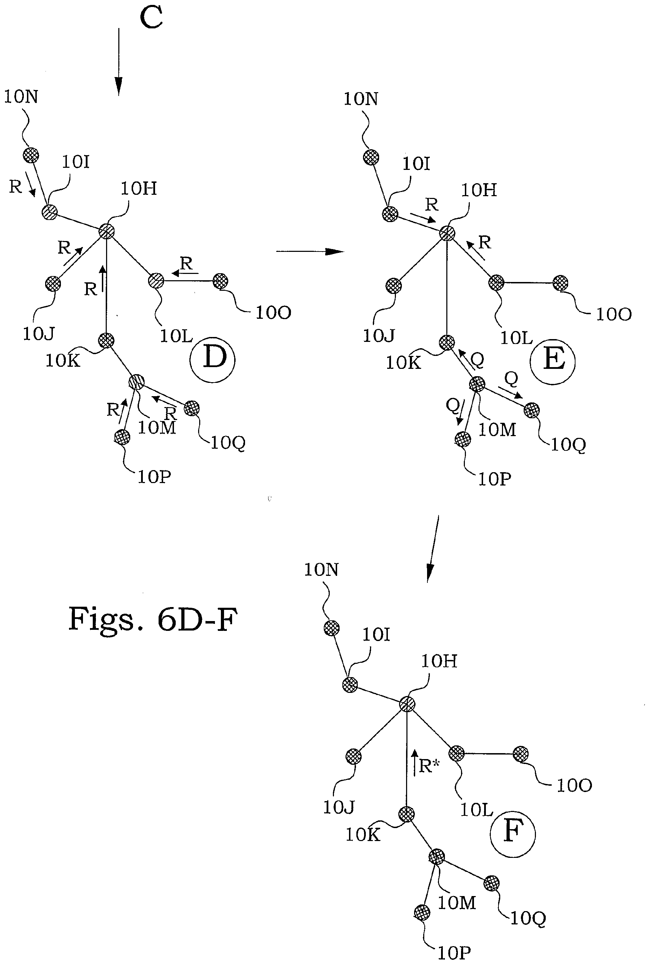

An example of such a situation is illustrated in Fig. 6. In part A, node 10H sends an explorer message E to the nodes 10I-M. In part B, nodes 10I, 10L and 10M forwards the explorer message E to nodes 10N-Q. In part C, during the preparation of replies in the leaf nodes, the link between nodes 10M and 10H is broken. Instead, a new link between nodes 10M and 10K is established. In part D, the contraction phase starts and the nodes 10J-K, 10N-Q send reply messages R to the nodes 10I, 10H, 10L and 10M, from which they received the first explorer message. The reply information is compiled and further reply messages R are sent from nodes 10I and 10L to node 10H, as indicated in part E. However, node 10M received its first explorer message from node 10H directly and tries first to reply directly to node 10H. However, the broken link is discovered and instead node 10M tries to retrieve from its registers if there are any alternative "parent" nodes available. Also this attempt fails. A request to its "children" nodes 10P and 10Q about any alternative paths also fails. The node 10M then sends a general new route request message Q to any node within communication range. The new route request message Q comprises an inquiry whether the explorer message in question has been received in any stage. The new route request message Q is in the present example transmitted over the new link to node 10K (as well as to nodes 10P and 10Q), and node 10K replies that it recognises the explorer message. A reply message R* is therefore sent from node 10M to node 10K (not illustrated), with a special flag marking this reply message as a message that takes an alternative path back to the originating node. Alternatively, the reply message R can be comprised directly in the new route request message. Finally, in part F, node 10K forwards the new route reply message R* to the node 10H.

The new route approach can be further developed. If no new nodes are found by the first request messages, the children can be ordered to forward the new route request message to further nodes. If an alternative way is found, a reply message is returned that way. As before, several identical answers may arrive at the node originally creating the explorer message, however, that node can easily detect the redundancy and only use one of the replies.

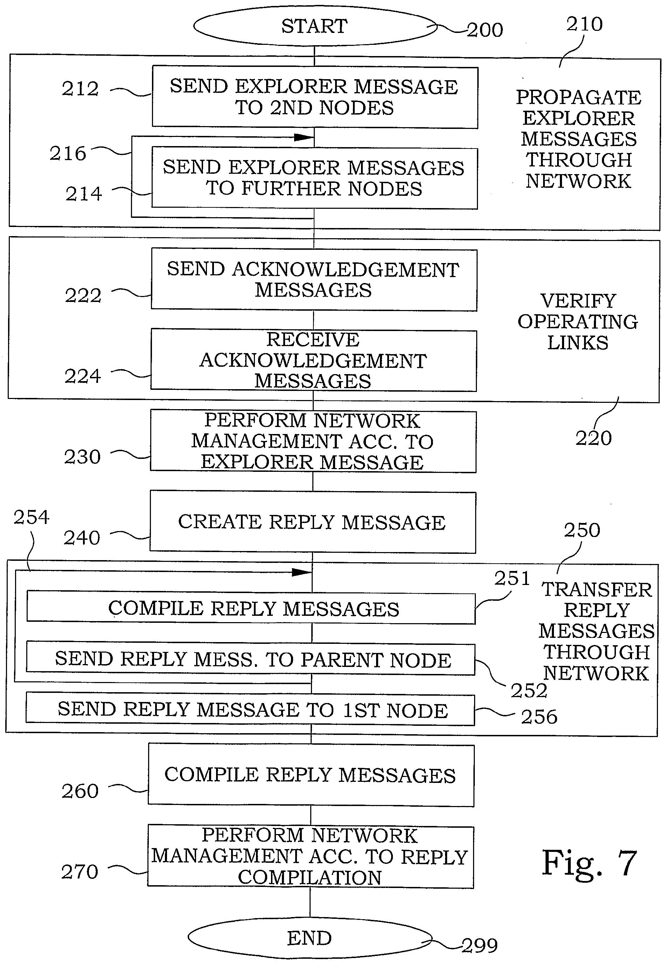

Fig. 7 illustrates a flow diagram of main steps of an embodiment of a method according to the present invention. The procedure starts in step 200. In step 210 an explorer message is propagated from a first node successively through a dynamic communication network. The step 210 preferably comprises part steps. In step 212, a 1st node sends the explorer message to a 2nd node. In step 214, the 2nd node forwards the explorer message to further nodes. This successive propagation continues until the explorer message has reached intended nodes, as indicated by the arrow 216.

Step 220 is a step of verifying operating links in the dynamic communication network. This is performed in connection with the propagating of the explorer message. Also this step is preferably divided into part steps. In step 222, an acknowledgement message is sent as a respond to the reception of an explorer message, and in step 224, the acknowledgement message is received in the node that sent the explorer message, thereby informing the node about operating links.

In step 230, network management operations are performed in the nodes receiving the explorer message, if the explorer message requested any such operations. In step 240, a reply message on the explorer message is created. This reply message typically comprises results of network management operations if any and/or different kinds of requested network information. Typical information can be e.g. free processor capacity, link capacities to neighbours and different kinds of network status.

The reply messages are transferred through the dynamic communication network over the operating links in step 250. This step preferably comprises a number of part steps. In step 251, any received reply messages are compiled in a node and any additional information from that node may be added. In step 252, the reply message is sent to a parent node, which supplied the corresponding explorer message. This is repeated upwards through the dynamic communication network as indicated by the arrow 254. In each step, reply messages from "child" nodes are compiled and network information and/or network management operation results from the own node is added. In step 256, the reply message is sent to the node originally issuing the explorer message, i.e. the 1st node.

The reply messages are compiled in the 1st node in step 260. In step 270 further network management operations are initiated and/or performed if suitable, based on the compilation. The procedure ends in step 299.

In preferred embodiments, comprising keep-alive functionality, the identifying step 220 is further developed according to the principles described further above. Moreover, in preferred embodiments, comprising sending of reply messages along a new route in case of link failures, the transfer step 250 is further developed according to the principles described further above.

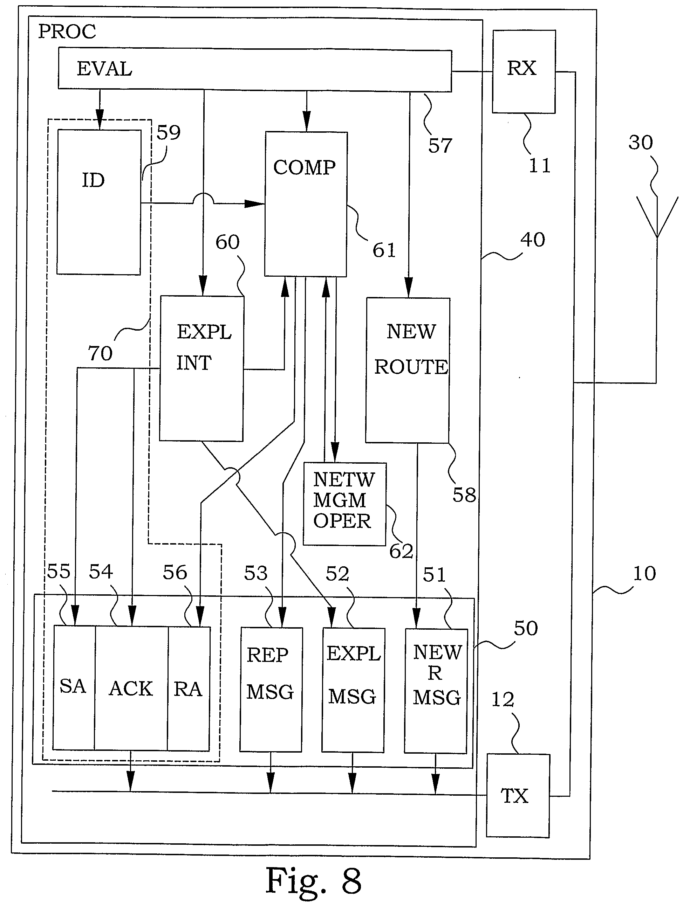

Fig. 8 illustrates a block scheme of main blocks of an embodiment of a node 10 according to the present invention. The node 10 communicates with a dynamic communications network, e.g. via an interface, in this particular embodiment an antenna 30. The node 10 comprises a receiver 11 and a transmitter 12. A processing unit 40 comprises in this particular embodiment the functionality sections of importance for the present invention. The different sections in the processing units should therefore be considered merely as functional units rather than physically separated ones. The transmitter 12 is connected to a message creator 50. The message creator 50 comprises in this embodiment an explorer message generator 52, a new route message generator 51, a reply message generator 53, an acknowledgement message generator 54, a subsequent acknowledgement generator 55 and a reply acknowledgement generator 56, all of them arranged to enable messages to be sent out on the dynamic communication network through the transmitter 12. In particular, the explorer message generator 52 utilises the transmitter 12 in order to be able to propagate the explorer messages successively through a dynamic communication network, to which the node is connected.

The receiver 11 is connected to an evaluation section 57, in which received messages are investigated. In case of a received explorer message, the information is provided to an explorer interpreter 60. The explorer interpreter 60 checks the identity of the explorer message, and if the explorer message is received for the first time, the explorer interpreter 60 initiates the acknowledgement generator 54 to generate an acknowledgement message to be returned to the node that sent the explorer message. At the same time, the explorer interpreter 60 initiates the explorer message generator 52 to forward the explorer message to other nodes of the communications network. If the explorer message already has been received before, the explorer interpreter 60 may instead initiate the reply message generator 54 to generate a reply informing the transmitting node that this pattern has already been received. The content of the explorer message is also interpreted in the explorer interpreter 60, and any demanded activities, such as collecting data or status of the network or other network management operations, are performed in a management section 62. Any results from such activities are provided to a compilation section 61, described further below.

If the received message is an acknowledgement message or subsequent acknowledgement message, the information that such a message is received and from which node and assisted to which explorer message, is provided to a link identifier 59. The link identifier 59 uses this information to identify which links that are operating at the moment of sending the explorer message, i.e. from which nodes it can be expected to get a reply message. Such information is then provided to the compilation section 61 to enable a decision whether a complete set of replies is received or not. The link identifier 59 and the three acknowledgement generators 54, 55, 56, together forms a means 70 for identifying operating links in the dynamic communication network. Such identifying is performed in connection to the actual propagating of explorer messages.

If a reply message is received, the identity of the node sending it and the content is provided to the compilation section 61. The compilation section 61 also initiates the reply acknowledgement generator 56 to create a reply acknowledgement message and send it to the node from which the reply was received. The compilation section 61 compiles the reply information from nodes that have received explorer messages from the node in question. This compiled reply information is combined with results from the management section 62, if any. When all available nodes have replied, as determined based on the information from the link identifier 59, or if appropriate timeout periods have elapsed, the compilation section 61 initiates the reply message generator 53 to create a reply message on a received explorer message. The transmitter 12 is then utilised for transferring the reply message through the dynamic communication network. The link identifier 59 is also informed about the transfer of the reply message. If the node in question is the node originally creating the explorer message, the compiled reply information can also be utilised to initiate further network management operations in the own node and/or in the network by initiating new patterns, by the management section 62.

If the link identifier 59 does not receive any reply acknowledgement within a predetermined time, the link is assumed to be non-operating. A new route handling section 58 is informed and suitable actions are initiated, e.g. by initiate the new route message generator 51 to create suitable messages. The explorer interpreter 60 contributes with information about which nodes that have provided the same explorer messages, which according to earlier described routines can be used for finding alternative routes.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

### REFERENCES

[1] K.S. Lim and R. Stadler: "Developing pattern-based management programs", 4th IFIP/IEEE International Conference on Management of Multimedia and Network Services (MMNS'01), Chicago, Illinois, October/November 2001, pp. 345-358.
[2] K.S. Lim, C. Adam and R. Stadler; "Decentralizing Network Management", submitted to IEEE electronic Transactions on Network and Service Management
[3] K.S. Lim and R. Stadler; "Weaver: realizing a scalable management paradigm on commodity routers", 8th IFIP/IEEE International Symposium on Integrated Network Management , 24-28 March 2003, Colorado Springs, Colorado, March 2003, pp:409 - 424
[4] C. Adam, R. Stadler, "Patterns for Routing and Self-Stabilization", in Proc. of Network Operations & Management Symposium (NOMS 2004), Seoul, Korea, April 19.23, 2004

## Claims

1. Method for network management of a dynamic communication network (1), comprising the steps of:
propagating (210) a control message (E; E1-3) from a first node (10A; 10H) successively through said dynamic communication network (1);
said step of propagating (210) comprising the step of distributing said control message (E; E1-3) from said first node (10A; 10H) to at least one second node (10; 10B, 10C, 10E., 10F; 10I-M);
said propagating step (210) comprising the further step of forwarding said control message (E; E1-3) from said at least one second node (10; 10B, 10C, 10E, 10F; 10I-M) to at least one further node (10D, 10G; 10N-Q) in said dynamic communication network (1) as a response on reception of said control message (E; E1-3) for a first time in said at least one second node (10; 10B, 10C, 10E, 10F; 10I-M);
verifying (220) operating links (20) in said dynamic communication network (1) in connection with said step of propagating (210), said step of verifying (220) is based on acknowledgement messages (A1-2) associated with reception of said control message (E; E1-3), wherein said acknowledgement messages (A1-2) are constituted by a forwarded control message (E2, E3) returned to the first node providing said control message (E; E1-3) to said at least one second node (10; 10B, 10C, 10E, 10F; 10I-M);
performing (230) network management operations in at least one node (10; 10B-G; 10I-Q) in said dynamic communication network (1) based on said control message (E; E1-3);
creating (240) reply messages on said control message (E; E1-3) in nodes (10; 10A-Q) of said dynamic communication network (1);
said reply messages (R1-3) comprising information about the performing step (230) and/ or results thereof, if any;
transferring (250) said reply messages (R1-3) through said dynamic communication network (1) over at least one of said operating links (20); and
compiling (260) said reply messages (R1-3) received by said first node (10A; 10H).

2. Method according to claim 1, comprising the further step of:
sending a reply message (R1-3) along a new route if a link (20A) providing said control message (E; E1-3) is interrupted, and
wherein said step of verifying (220) comprises the steps of:
sending a first acknowledgement message (A1), from said at least one second node (10; 10B, 10C, 10E, 10F; 10I-M), to said first node (10A; 10H), upon reception of said control message (E; E1-3); and receiving said first acknowledgement message (A1) in said first node (10A; 10H) from said at least one second node (10; 10B, 10C, 10E, 10F; 10I-M).

3. Method according to claim 2, wherein said step of creating (240) reply messages (R1-3) comprises the step of creating a reply message (R1) in said at least one second node (10; 10B, 10C, 10E, 10F; 10I-M) and said step of transferring (250) comprises the step of transferring said reply message (R1) created in said at least one second node (10; 10B, 10C, 10E, 10F; 10I-M) to said first node (10A; 10H), wherein said step of creating (240) a reply message in said at least one second node (10; 10B, 10C, 10E, 10F; 10I-M) is performed as a response on reception of said control message (E; E1-3) for a second or subsequent time in said at least one second node (10; 10B, 10C, 10E, 10F; 10I-M).

4. Method according to claim 2, wherein said step of verifying (220) further comprises the steps of:
sending a second acknowledgement message (A2), from said at least one further node (10D, 10G; 10N-Q), to said at least one second node (10; 10B, 10C, 10E, 10F; 10I-M), upon reception of said forwarded control message (E2, E3); and
receiving said second acknowledgement message (A2) in said at least one second node (10; 10B, 10C, 10E, 10F; 10I-M) from said at least one further node (10D, 10G; 10N-Q), wherein said second acknowledgement message (A2) from said at least one further node (10D, 10G; 10N-Q) is constituted by said forwarded control message ((E2, E3).

5. Method according to claim 1, wherein said step of creating (240) reply messages (R1-3) comprises the step of creating a reply message (R2) in said at least one further node (10D, 10G; 10N-Q) and said step of transferring (250) comprises the step of transferring said reply message (R2) created in said at least one further node (10D, 10G; 10N-Q) to said at least one second node (10; 10B, 10C, 10E, 10F; 10I-M), wherein said step of creating (240) a reply message (R1-3) in said at least one second node (10; 10B, 10C, 10E, 10F; 10I-M) is performed if reply messages (R2) are received from all nodes providing a second acknowledgement message (A2) to said at least one second node (10; 10B, 10C, 10E, 10F; 10I-M) and wherein said step of creating (240) a reply message (R1-3) in said at least one second node (10; 10B, 10C, 10E, 10F; 10I-M) is performed a first timeout period after said forwarding step if reply messages (R2) are not received from all nodes providing a second acknowledgement message (A2) to said at least one second node (10; 10B, 10C, 10E, 10F; 10I-M).

6. Method according to any of the claims 1 to 5, wherein said steps of forwarding, sending a first acknowledgement message A1, receiving first reply message, creating a reply message and/ or transferring (250) said reply message are performed successively through said dynamic communication network (1).

7. Method according to any of the claims 1 to 6, comprising the further step of:
sending a subsequent acknowledgement message (S1A1-2; S2A1-2) a predetermined period after sending said first acknowledgement message (A1-2), if a reply message (Rl-2) not yet is created.

8. Method according to claim 7, wherein said step of creating (240) a reply message (R1-3) and said step of performing (230) network management are performed if said reply messages (R1-3) are received from all nodes within said predetermined period from receiving a respective acknowledgement message(A1-2) or subsequent (S1A1-2; S2A1-2) acknowledgement message.

9. Method according to any of the claims 1 to 8, comprising the further steps of:
storing information about nodes from which said control message (E; E1-3) is received for a second or subsequent time; and
sending a reply message (R1-3) along a new route to a node of said nodes from which said control message (E; E1-3} is received for said second or subsequent time, if a link (20A) providing said control message (E; E1-3) for the first time is interrupted.

10. Method according to any of the claims 1 to 9, comprising the further steps of:
transmitting a new route request message to nodes of said dynamic communication network (1), if said link (20A) providing said control message (E1-3) for the first time is interrupted;
said new route request message comprising an inquiry if a node receiving said new route request message has a connection to said first node (10A; 10H);
confirming, from said node receiving said new route request message to the node transmitting said new route request message, a connection to said first node (10A; 10H); and
sending a reply message (R1-3) along a new route via said node receiving said new route request message to said first node (10A; 10H), wherein said new route request message comprises said reply message (R1-3).

11. Method according to claim 10, wherein said node receiving said new route request message is a node that has received said control message (E; E1-3) from said node transmitting said new route request message or wherein said node receiving said new route request message is a node that has not received said control message (E; E1-3) from said node transmitting said new route request message.

12. Method according to any of the claims 10 to 11, wherein said inquiry comprises an investigation whether said node receiving said new route request message has received said control message (E; E1-3) from any other node than said node transmitting said new route request message or not.

13. Node (10; 10A-Q) in a dynamic communication network (1), comprising:
means (12) for propagating a control message (E1-3) successively through said dynamic communication network (1);
said means (12) for propagating being arranged for distributing said control message (E; E1-3) to at least another node (10; 10B, 10C, 10E, 10F; 10I-M);
said means (12) for propagating being further arranged for forwarding a received control message (E1-3) to at least another node (10D, 10G; 10N-Q) in said dynamic communication network (1) as a response on reception of said control message (E1-3) for a first time in said node (10; 10B, 10C, 10E, 10F; 10I-M);
means (70) for verifying operating links (20) in said dynamic communication network (1) connected to said means (12) for propagating, said means for verifying (220) being based on acknowledgement messages (A1-2) associated with reception of said control message (E; E1-3), wherein said acknowledgement messages (A1-2) are constituted by a forwarded control message returned to the node providing said control message to said at least another node (10; 10B, 10C, 10E, 10F; 10I-M);
means (62) for performing network management operations based on said received control message (E; E1-3);
means (53) for creating reply messages (R1-3) to said control message (E; E1-3);
said reply messages (R1-3) comprising information about, said network management operations and/ or results thereof, if any;
means (12) for transferring said reply messages (R1-3) through said dynamic communication network (1) over at least one of said operating links (20); and
means (61) for compiling received reply messages (R1-3).

14. Node according to claim 13, further comprising:
means (58) for sending a reply message (R1-3) along a new route if a link (20A) providing said control message (E; E1-3) is interrupted, wherein
said means (12) for propagating comprises means for distributing a pattern message to at least another node;
said means (70) for identifying comprises:
means (54) for sending said acknowledgement messages (A1-2) upon reception of said control message (E1-3) to a node from which said control message (E1-3) is received; and
means (59) for receiving said acknowledgement messages (A1-2).

15. Communication network (1), comprising at least one node (10; 10A-Q) according to any of the claims 13-14.

## Patentansprüche

1. Verfahren zur Netzwerkverwaltung eines dynamischen Kommunikationsnetzwerks (1), wobei das Verfahren folgende Schritte umfasst:
aufeinanderfolgendes Verbreiten (210) einer Steuernachricht (E; E1-3) von einem ersten Knoten (10A; 10H) durch das dynamische Kommunikationsnetzwerk (1);
wobei der Schritt des Verbreitens (210) den Schritt des Verteilens der Steuernachricht (E; E1-3) von dem ersten Knoten (10A; 10H) an wenigstens einen zweiten Knoten (10; 10B, 10C, 10E, 10F; 10I-M) umfasst;
wobei der Schritt des Verbreitens (210) ferner den Schritt des Weiterleitens der Steuernachricht (E; E1-3) von dem wenigstens einen zweiten Knoten (10; 10B, 10C, 10E, 10F; 10I-M) an wenigstens einen weiteren Knoten (10D, 10G; 10N-Q) in dem dynamischen Kommunikationsnetzwerk (1) umfasst als Antwort auf einen erstmaligen Empfang der Steuernachricht (E; E1-3) an dem wenigstens einen zweiten Knoten (10; 10B, 10C, 10E, 10F; 10I-M);
Verifizieren (220) von tätigen Verbindungen (20) in dem dynamischen Kommunikationsnetzwerk (1) im Zusammenhang mit dem Schritt des Verbreitens (210), wobei der Schritt des Verifizierens (220) auf Bestätigungsnachrichten (A1-2) basiert, die mit dem Empfang der Steuernachricht (E; E1-3) assoziiert sind, wobei die Bestätigungsnachrichten (A1-2) aus einer weitergeleitete Steuernachricht (E2, E3) gebildet werden, die zu dem ersten Knoten zurückgesendet wird, der die Steuernachricht (E; E1-3) an den wenigstens einen zweiten Knoten (10; 10B, 10C, 10E, 10F; 10I-M) bereitstellt;
Durchführen (230) von Netzwerkverwaltungstätigkeiten an wenigstens einem Knoten (10; 10B-G; 10I-Q) in dem dynamischen Kommunikationsnetzwerk (1) basierend auf der Steuernachricht (E; E1-3);
Erzeugen (240) von Antwortnachrichten auf die Steuernachricht (E; E1-3) in Knoten (10; 10A-Q) des dynamischen Kommunikationsnetzwerks (1);
wobei die Antwortnachrichten (R1-3) Informationen über den Durchführungsschritt (230) und/oder Ergebnisse davon, falls vorhanden, umfassen;
Übertragen (250) der Antwortnachrichten (R1-3) durch das dynamische Kommunikationsnetzwerk (1) über wenigstens eine der tätigen Verbindungen (20); und
Kompilieren (260) der Antwortnachrichten (R1-3), die von dem ersten Knoten (10A; 10H) empfangen wurden.

2. Verfahren nach Anspruch 1, ferner umfassend den folgenden Schritt:
Senden einer Antwortnachricht (R1-3) entlang einer neuen Route, falls eine Verbindung (20A), die die Steuernachricht (E; E1-3) bereitstellt, unterbrochen ist, und
wobei der Schritt des Verifizierens (220) die folgenden Schritte umfasst:
Senden einer ersten Bestätigungsnachricht (A1) von dem wenigstens einen zweiten Knoten (10; 10B, 10C, 10E, 10F; 10I-M) an den ersten Knoten (10A; 10H) beim Empfang der Steuernachricht (E; E1-3); und Empfangen der ersten Bestätigungsnachricht (A1) von dem wenigstens einen zweiten Knoten (10; 10B, 10C, 10E, 10F; 10I-M) in dem ersten Knoten (10A; 10H).

3. Verfahren nach Anspruch 2, wobei der Schritt des Erzeugens (240) von Antwortnachrichten (R1-3) den Schritt des Erzeugens einer Antwortnachricht (R1) in dem wenigstens einen zweiten Knoten (10; 10B, 10C, 10E, 10F; 10I-M) umfasst und der Schritt des Übertragens (250) den Schritt des Übertragens der Antwortnachricht (R1), die in dem wenigstens einen zweiten Knoten (10; 10B, 10C, 10E, 10F; 10I-M) erzeugt wurde, an den ersten Knoten (10A; 10H) umfasst, wobei der Schritt des Erzeugens (240) einer Antwortnachricht in dem wenigstens einen zweiten Knoten (10; 10B, 10C, 10E, 10F; 10I-M) als eine Antwort beim zweiten oder nachfolgenden Empfang der Steuernachricht (E; E1-3) in dem wenigstens einen zweiten Knoten (10; 10B, 10C, 10E, 10F; 10I-M) durchgeführt wird.

4. Verfahren nach Anspruch 2, wobei der Schritt des Verifizierens (220) ferner die folgenden Schritte umfasst:
Senden einer zweiten Bestätigungsnachricht (A2) von dem wenigstens einen weiteren Knoten (10D, 10G; 10N-Q) an den wenigstens einen zweiten Knoten (10; 10B, 10C, 10E, 10F; 10I-M) beim Empfang der weitergeleiteten Steuernachricht (E2, E3); und
Empfangen der zweiten Bestätigungsnachricht (A2) von dem wenigstens einen weiteren Knoten (10D, 10G, 10N-Q) in dem wenigstens einen zweiten Knoten (10; 10B, 10C, 10E, 10F; 10I-M), wobei die zweite Bestätigungsnachricht (A2) von dem wenigstens einen weiteren Knoten (10D, 10G; 10N-Q) von einer weitergeleiteten Steuernachricht (E2, E3) gebildet wird.

5. Verfahren nach Anspruch 1, wobei der Schritt des Erzeugens (240) von Antwortnachrichten (R1-3) den Schritt des Erzeugens einer Antwortnachricht (R2) in dem wenigstens einen weiteren Knoten (10D, 10G; 10N-Q) umfasst und der Schritt des Übertragens (250) den Schritt des Übertragens der Antwortnachricht (R2), die in dem wenigstens einen weiteren Knoten (10D, 10G; 10N-Q) erzeugt wurde, an den wenigstens einen zweiten Knoten (10; 10B, 10C, 10E, 10F; 10I-M) umfasst, wobei der Schritt des Erzeugens (240) einer Antwortnachricht (R1-3) in dem wenigstens einen zweiten Knoten (10; 10B, 10C, 10E, 10F; 10I-M) durchgeführt wird, falls Antwortnachrichten (R2) von allen Knoten, die eine zweiten Bestätigungsantwort (A2) an den wenigstens einen zweiten Knoten (10; 10B, 10C, 10E, 10F; 10I-M) bereitstellen, empfangen werden, und wobei der Schritt des Erzeugens (240) einer Antwortnachricht (R1-3) in dem wenigstens einen zweiten Knoten (10; 10B, 10C, 10E, 10F; 10I-M) in einer ersten Wartezeit nach dem Weiterleitungsschritt durchgeführt wird, falls Antwortnachrichten (R2) nicht von allen Knoten empfangen werden, die eine zweite Bestätigungsnachricht (A2) an den wenigstens einen zweiten Knoten (10; 10B, 10C, 10E, 10F; 10I-M) bereitstellen.

6. Verfahren nach einem der Ansprüche 1 bis 5, wobei die Schritte des Weiterleitens, des Sendens einer ersten Bestätigungsnachricht (A1), des Empfangens einer ersten Antwortnachricht, des Erzeugens einer Antwortnachricht und/oder des Übertragens (250) der Antwortnachricht durch das dynamische Kommunikationsnetzwerk (1) aufeinanderfolgend durchgeführt werden.

7. Verfahren nach einem der Ansprüche 1 bis 6, ferner umfassend den folgenden Schritt:
Senden einer nachfolgenden Bestätigungsnachricht (S1A1-2; S2A1-2) nach Ablauf einer vorbestimmten Zeitspanne nach dem Senden der ersten Bestätigungsnachricht (A1-2), falls eine Antwortnachricht (R1-2) noch nicht erzeugt wurde.

8. Verfahren nach Anspruch 7, wobei der Schritt des Erzeugens (240) einer Antwortnachricht (R1-3) und der Schritt des Durchführens (230) von Netzwerkverwaltung durchgeführt werden, falls die Antwortnachrichten (R1-3) von allen Knoten innerhalb der vorbestimmten Zeitspanne ab einem Empfang einer entsprechenden Bestätigungsnachricht (A1-2) oder nachfolgenden (S1A1-2; S2A1-2) Bestätigungsnachricht empfangen werden.

9. Verfahren nach einem der Ansprüche 1 bis 8, ferner umfassend die folgenden Schritte:
Speichern von Informationen über Knoten, von denen die Steuernachricht (E; E1-3) zum zweiten oder nachfolgenden Mal empfangen wird; und
Senden einer Antwortnachricht (R1-3) entlang einer neuen Route an einen Knoten der Knoten, von denen aus die Steuernachricht (E; E1-3) zum zweiten oder nachfolgenden Mal empfangen wird, falls eine Verbindung (20A), die die Steuernachricht (E; E1-3) beim ersten Mal bereitstellt, unterbrochen ist.

10. Verfahren nach einem der Ansprüche 1 bis 9, ferner umfassend die folgenden Schritte:
Übertragen einer Anfragenachricht nach einer neuen Route an Knoten des dynamischen Kommunikationsnetzwerks (1), falls die Verbindung (20A), die die Steuernachricht (E1-3) beim ersten Mal bereitstellt, unterbrochen ist;
wobei die Anfragenachricht nach einer neuen Route eine Abfrage umfasst, ob ein Knoten, der die Anfragenachricht nach einer neuen Route empfängt, eine Verbindung zu dem ersten Knoten (10A; 10H) aufweist;
Bestätigen, durch den Knoten, der die Anfragenachricht nach einer neuen Route empfängt, an den Knoten, der die Anfragenachricht nach einer neuen Route überträgt, einer Verbindung zu dem ersten Knoten (10A; 10H);
Senden einer Antwortnachricht (R1-3) entlang einer neuen Route über den Knoten, der die Anfragenachricht nach einer neuen Route empfängt, an den ersten Knoten (10A; 10H), wobei die Anfragenachricht nach einer neuen Route die Antwortnachricht (R1-3) umfasst.

11. Verfahren nach Anspruch 10, wobei der Knoten, der die Anfragenachricht nach einer neuen Route empfängt, ein Knoten ist, der die Steuernachricht (E; E1-3) von dem Knoten, der die Anfragenachricht nach einer neuen Route überträgt, empfangen hat, oder wobei der Knoten, der die Anfragenachricht nach einer neuen Route empfängt, ein Knoten ist, der die Steuernachricht (E; E1-3) von dem Knoten, der die Anfragenachricht nach einer neuen Route überträgt, nicht empfangen hat.

12. Verfahren nach einem der Ansprüche 10 bis 11, wobei die Abfrage eine Untersuchung umfasst, ob der Knoten, der die Anfragenachricht nach einer neuen Route empfängt, die Steuernachricht (E; E1-3) von einem beliebigen anderen Knoten als dem Knoten, der die Anfragenachricht nach einer neuen Route überträgt, empfangen hat oder nicht.

13. Knoten (10; 10A-Q) in einem dynamischen Kommunikationsnetzwerk (1), der Folgendes umfasst:
Einrichtung (12) zum aufeinanderfolgenden Verbreiten einer Steuernachricht (E1-3) durch das dynamische Kommunikationsnetzwerk (1);
wobei die Einrichtung (12) zum Verbreiten angeordnet ist zum Verteilen der Steuernachricht (E; E1-3) an wenigstens einen weiteren Knoten (10; 10B, 10C, 10E, 10F; 10I-M);
wobei die Einrichtung (12) zum Verbreiten ferner angeordnet ist zum Weiterleiten einer empfangenen Steuernachricht (E1-3) an wenigstens einen weiteren Knoten (10D, 10G; 10N-Q) in dem dynamischen Kommunikationsnetzwerk (1) als Antwort auf ein erstmaliges Empfangen der Steuernachricht (E1-3) in dem Knoten (10; 10B, 10C, 10E, 10F; 10I-M) ;
Einrichtung (70) zum Verifizieren von tätigen Verbindungen (20) in dem dynamischen Kommunikationsnetzwerk (1), die mit der Einrichtung (12) zum Verbreiten verbunden sind, wobei die Einrichtung zum Verifizieren (220) auf Bestätigungsnachrichten (A1-2) basiert, die mit einem Empfang der Steuernachricht (E; E1-3) assoziiert sind, wobei die Bestätigungsnachrichten (A1-2) aus einer weitergeleiteten Steuernachricht bestehen, die an den Knoten zurückgesendet wird, der die Steuernachricht an den wenigstens einen weiteren Knoten (10; 10B, 10C, 10E, 10F; 10I-M) bereitstellt;
Einrichtung (62) zum Durchführen von Netzwerkverwaltungstätigkeiten basierend auf der empfangenen Steuernachricht (E; E1-3);
Einrichtung (53) zum Erzeugen von Antwortnachrichten (R1-3) auf die Steuernachricht (E; E1-3);
wobei die Antwortnachrichten (R1-3) Informationen über die Netzwerkverwaltungstätigkeiten und/oder deren Ergebnisse, falls vorhanden, umfassen;
Einrichtung (12) zum Übertragen der Antwortnachrichten (R1-3) durch das dynamische Kommunikationsnetzwerk (1) über wenigstens eine der tätigen Verbindungen (20); und
Einrichtung (61) zum Kompilieren der empfangenen Antwortnachrichten (R1-3).

14. Knoten nach Anspruch 13, ferner umfassend:
Einrichtung (58) zum Senden einer Antwortnachricht (R1-3) entlang einer neuen Route, falls eine Verbindung (20A), die die Steuernachricht (E; E1-3) bereitstellt, unterbrochen ist, wobei
die Einrichtung (12) zum Verbreiten eine Einrichtung zum Verteilen einer Musternachricht an wenigstens einen weiteren Knoten umfasst;
wobei die Einrichtung (70) zum Identifizieren Folgendes umfasst:
Einrichtung (54) zum Senden der Bestätigungsnachrichten (A1-2) beim Empfang der Steuernachricht (E1-3) an einen Knoten, von dem aus die Steuernachricht (E1-3) empfangen wird; und
Einrichtung (59) zum Empfangen der Bestätigungsnachrichten (A1-2).

15. Kommunikationsnetzwerk (1), das wenigstens einen Knoten (10; 10A-Q) nach einem der Ansprüche 13-14 umfasst.

## Revendications

1. Procédé de gestion de réseau d'un réseau de communication dynamique (1), comprenant les étapes suivantes :
la propagation (210) d'un message de commande (E ; E1-3) à partir d'un premier noeud (10A ; 10H) successivement à travers ledit réseau de communication dynamique (1) ;
ladite étape de propagation (210) comprenant l'étape de distribution dudit message de commande (E ; E1-3) à partir dudit premier noeud (10A ; 10H) vers au moins un second noeud (10 ; 10B, 10C, 10E, 10F, 10I-M) ;
ladite étape de propagation (210) comprenant l'étape supplémentaire de transfert dudit message de commande (E ; E1-3) à partir dudit au moins un second noeud (10 ; 10B, 10C, 10E, 10F ; 10I-M) vers au moins un noeud supplémentaire (10D, 10G ; 10N-Q) dans ledit réseau de communication dynamique (1) en réponse à la réception dudit message de commande (E ; E1-3) pour un premier temps dans ledit au moins un second noeud (10 ; 10B, 10C, 10E, 10F ; 10I-M) ;
la vérification (220) de liaisons de fonctionnement (20) dans ledit réseau de communication dynamique (1) en rapport avec ladite étape de propagation (210), ladite étape de vérification (220) étant basée sur des messages d'accusé de réception (A1-2) associés à la réception dudit message de commande (E ; E1-3), dans lequel lesdits messages d'accusé de réception (A1-2) sont constitués d'un message de commande transféré (E2, E3) renvoyé au premier noeud fournissant ledit message de commande (E ; E1-3) audit au moins un second noeud (10 ; 10B, 10C, 10E, 10F ; 10I-M) ;
la réalisation (230) d'opérations de gestion de réseau dans au moins un noeud (10 ; 10B-G ; 10I-Q) dans ledit réseau de communication dynamique (1) sur la base dudit message de commande (E ; E1-3) ;
la création (240) de messages de réponse sur ledit message de commande (E ; E1-3) dans des noeuds (10 ; 10A-Q) dudit réseau de communication dynamique (1) ;
lesdits messages de réponse (R1-3) comprenant des informations
concernant l'étape de réalisation (230) et/ou des résultats de celle-ci, le cas échéant ;
le transfert (250) desdits messages de réponse (R1-3) à travers
ledit réseau de communication dynamique (1) sur au moins l'une desdites liaisons de fonctionnement (20) ; et
la compilation (260) desdits messages de réponse (R1-3) reçus par ledit premier noeud (10A ; 10H).

2. Procédé selon la revendication 1, comprenant l'étape supplémentaire suivante :
l'envoi d'un message de réponse (R1-3) le long d'un itinéraire si une liaison (20A) fournissant ledit message de commande (E ; E1-3) est interrompue, et
dans lequel ladite étape de vérification (220) comprenant les étapes suivantes :
l'envoi d'un premier message d'accusé de réception (A1), dudit au moins un second noeud (10 ; 10B, 10C, 10E, 10F ; 10I-M) vers ledit premier noeud (10A ; 10H) lors de la réception dudit message de commande (E ; E1-3) ; et la réception dudit premier message d'accusé de réception (A1) dans ledit premier noeud (10A ; 10H) à partir dudit au moins un second noeud (10 ; 10B, 10C, 10E, 10F ; 10I-M).

3. Procédé selon la revendication 2, dans lequel ladite étape de création (240) de messages de réponse (R1-3) comprend l'étape de création d'un message de réponse (R1) dans ledit au moins un second noeud (10 ; 10B, 10C, 10E, 10F ; 10I-M) et ladite étape de transfert (250) comprend l'étape de transfert dudit message de réponse (R1) créé dans ledit au moins un second réseau (10 ; 10B, 10C, 10E, 10F ; 10I-M) vers ledit premier noeud (10A ; 10H), dans lequel l'étape de création (240) d'un message de réponse dans ledit au moins un second noeud (10 ; 10B, 10C, 10E, 10F ; 10I-M) est réalisée en réponse à la réception dudit message de commande (E ; E1-3) pour un second temps ou un temps ultérieur dans ledit au moins un second noeud (10 ; 10B, 10C, 10E, 10F ; 10I-M).

4. Procédé selon la revendication 2, dans lequel ladite étape de vérification (220) comprend en outre les étapes suivantes :
l'envoi d'un second message d'accusé de réception (A2), à partir dudit au moins un noeud supplémentaire (10D, 10G ; 10N-Q) vers ledit au moins un second noeud (10 ; 10B, 10C, 10E, 10F ; 10I-M), lors de la réception dudit message de commande transféré (E2, E3) ; et
la réception dudit second message d'accusé de réception (A2) dans ledit au moins un second noeud (10 ; 10B, 10C, 10E, 10F ; 10I-M) à partir dudit au moins un noeud supplémentaire (10D, 10G ; 10N-Q), dans lequel ledit second message d'accusé de réception (A2) à partir dudit au moins un noeud supplémentaire (10D, 10G ; 10N-Q) est constitué dudit message de commande transféré (E2, E3).

5. Procédé selon la revendication 1, dans lequel ladite étape de création (240) de messages de réponse (R1-3) comprend l'étape de création d'un message de réponse (R2) dans ledit au moins un noeud supplémentaire (10D, 10G ; 10N-Q) et ladite étape de transfert (250) comprend l'étape de transfert dudit message de réponse (R2) créé dans ledit au moins un noeud supplémentaire (10D, 10G ; 10N-Q) vers ledit au moins un second noeud (10 ; 10B, 10C, 10E, 10F ; 10I-M), dans lequel ladite étape de création (240) d'un message de réponse (R1-3) dans ledit au moins un second noeud (10 ; 10B, 10C, 10E, 10F ; 10I-M) est réalisée si des messages de réponse (R2) sont reçus à partir de tous les noeuds fournissant un second message d'accusé de réception (A2) vers ledit au moins un second noeud (10 ; 10B, 10C, 10E, 10F ; 10I-M) et dans lequel ladite étape de création (240) d'un message de réponse (R1-3) dans ledit au moins un second noeud (10 ; 10B, 10C, 10E, 10F ; 10I-M) est réalisée une première période de temporisation après ladite étape de transfert si des messages de réponse (R2) ne sont pas reçus à partir de tous les noeuds fournissant un second message d'accusé de réception (A2) audit au moins un second noeud (10 ; 10B, 10C, 10E, 10F ; 10I-M).

6. Procédé selon l'une quelconque des revendications 1 à 5, dans lequel lesdites étapes de transfert, d'envoi d'un premier message d'accusé de réception A1, de réception d'un premier message de réponse, de création d'un message de réponse et/ou de transfert (250) dudit message de réponse sont réalisées successivement travers ledit réseau de communication dynamique (1).

7. Procédé selon l'une quelconque des revendications 1 à 6, comprenant l'étape supplémentaire suivante :
l'envoi d'un message d'accusé de réception ultérieur (S1A1-2 ; S2A1-2) un période prédéterminée après l'envoi dudit premier message d'accusé de réception (A1-2), si un message de réponse (R1-2) n'est pas encore créé.

8. Procédé selon la revendication 7, dans lequel ladite étape de création (240) d'un message de réponse (R1-3) et ladite étape de réalisation (230) d'une gestion de réseau sont réalisées si lesdits messages de réponse (R1-3) sont reçus à partir de tous les noeuds dans ladite période prédéterminée à partir de la réception d'un message d'accusé de réception respectif (A1-2) ou d'un message d'accusé de réception ultérieur (S1A1-2 ; S2A1-2).

9. Procédé selon l'une quelconque des revendications 1 à 8, comprenant les étapes supplémentaires suivantes :
le stockage d'informations concernant des noeuds à partir desquels ledit message de commande (E ; E1-3) est reçu pour un second temps ou un temps ultérieur ; et
l'envoi d'un message de réponse (R1-3) le long d'un nouvel itinéraire vers un noeud desdits noeuds à partir desquels ledit message de commande (E ; E1-3) est reçu pour ledit second temps ou temps ultérieur, si une liaison (20A) fournissant ledit message de commande (E ; E1-3) pour le premier temps est interrompu.

10. Procédé selon l'une quelconque des revendications 1 à 9, comprenant les étapes supplémentaires suivantes :
la transmission d'un nouveau message de demande d'itinéraire vers des noeuds dudit réseau de communication dynamique (1), si ladite liaison (20A) fournissant ledit message de commande (E1-3) pour le premier temps est interrompue ;
ledit nouveau message de demande d'itinéraire comprenant une question visant à savoir si un noeud recevant ledit nouveau message de demande d'itinéraire a un rapport avec ledit premier noeud (10A ; 10H) ;
la confirmation, à partir dudit noeud recevant ledit nouveau message de demande d'itinéraire vers le noeud transmettant ledit nouveau message de demande d'itinéraire, d'un rapport avec ledit premier noeud (10A ; 10H) ; et
l'envoi d'un message de réponse (R1-3) le long d'un nouvel d'itinéraire à travers ledit noeud recevant ledit nouveau message de demande d'itinéraire vers ledit premier noeud (10A ; 10H), dans lequel ledit nouveau message de demande d'itinéraire comprend ledit message de réponse (R1-3).

11. Procédé selon la revendication 10, dans lequel ledit noeud recevant ledit nouveau message de demande d'itinéraire est un noeud qui a reçu ledit message de commande (E ; E1-3) à partir dudit noeud transmettant ledit nouveau message de demande d'itinéraire ou dans lequel ledit noeud recevant ledit nouveau message de demande d'itinéraire est un noeud qui n'a pas reçu ledit message de commande (E ; E1-3) à partir dudit noeud transmettant ledit nouveau message de demande d'itinéraire.

12. Procédé selon l'une quelconque des revendications 10 à 11, dans lequel ladite question comprend une recherche visant à savoir si ledit noeud recevant ledit nouveau message de demande d'itinéraire a reçu ou non ledit message de commande (E ; E1-3) à partir de tout autre noeud autre que ledit noeud transmettant ledit nouveau message de demande d'itinéraire.

13. Noeud (10 ; 10A-Q) dans un réseau de communication dynamique (1) comprenant :
un moyen (12) de propagation d'un message de commande (E1-3) successivement à travers ledit réseau de communication dynamique (1) ;
ledit moyen (12) de propagation étant agencé pour distribuer ledit message de commande (E ; E1-3) à au moins un autre noeud (10 ; 10B, 10C, 10E, 10F ; 10I-M) :
ledit moyen (12) de propagation étant en outre agencé pour transférer un message de commande reçu (E1-3) à au moins un autre noeud (10, 10G ; 10N-Q) dans ledit réseau de communication dynamique (1) en réponse à la réception dudit message de commande (E1-è3) pour un premier temps dans ledit noeud (10 ; 10B, 10C, 10E, 10F ; 10I-M) ;
un moyen (70) de vérification de liaisons de fonctionnement (20) dans ledit réseau de communication dynamique (1) lié audit moyen (12) de propagation, ledit moyen de vérification (220) étant basé sur des messages d'accusé de réception (A1-2) associés à la réception dudit message de commande (E ; E1-3), dans lequel lesdits messages d'accusé de réception (A1-2) sont constitués d'un message de commande transféré renvoyé au noeud fournissant ledit message de commande audit au moins un autre noeud (10 ; 10B, 10C, 10E, 10F ; 10I-M) ;
un moyen (62) de réalisation d'opérations de gestion de réseau sur la base dudit message de commande reçu (E ; E1-3)
un moyen (53) de création de messages de réponse (R1-3) pour ledit message de commande (E ; E1-3) ;
lesdits messages de réponse (R1-3) comprenant des informations concernant lesdites opérations de gestion de réseau et/ou des résultats de celles-ci, le cas échéant ;
un moyen (12) de transfert desdits messages de réponse (R1-3) à travers ledit réseau de communication dynamique (1) sur au moins l'une desdites liaisons de fonctionnement (20) ; et
un moyen (61) de compilation de messages de réponse reçus (R1-3).

14. Noeud selon la revendication 13, comprenant en outre :
un moyen (58) d'envoi d'un message de réponse (R1-3) le long d'un nouvel itinéraire si une liaison (20A) fournissant ledit message de commande (E ; E1-3) est interrompue, dans lequel ledit moyen (12) de propagation comprend un moyen de distribution d'un message de motif à au moins un autre noeud ;
ledit moyen (70) d'identification comprend :
un moyen (54) d'envoi desdits messages d'accusé de réception (A1-2) lors de la réception dudit message de commande (E1-3) vers un noeud à partir duquel ledit message de commande (E1-3) est reçu ; et
un moyen (59) d'envoi desdits messages d'accusé de réception (A1-2).

15. Réseau de communication (1) comprenant au moins un noeud (10 ; 10A-Q) selon l'une quelconque des revendications 13 à 14.
